# EUROPEAN PATENT APPLICATION

(11) **EP 2 744 231 A1**
(43) Date of publication of application: **18.06.2014**
(21) Application number: 12306574.0
(22) Date of filing: 12.12.2012
(51) Int. Cl.: H04W 4/00, H04L 29/08

(54) **Method, device, server and system for accessing a user interface relating to an application**

(71) Applicant: Gemalto SA, 92190 Meudon (FR)
(72) Inventor: Yingjie, Perrault Tao, 13705 LA CIOTAT (FR); Arnald, Valery, 13705 LA CIOTAT (FR); Godbert, Sylvain, 13705 LA CIOTAT (FR); Danielou, Karelle, 13705 LA CIOTAT (FR)

(57) **Abstract**

The invention relates to a method 20 for accessing a user interface relating to an application.

According to the invention, a device 12 comprises at least one memory. The memory stores at least one application. The device comprises or is connected to at least one Man Machine Interface 126, 128. The method comprises the following steps. The device sends to a server 16 a request 24 for personalizing a presentation of an application accompanied with an identifier relating to a user interface relating to the application. The server retrieves at least one graphical and/or sound item relating to the application on a basis of the received identifier. The server sends to the device at least one message 26, as request response, including the at least one retrieved graphical and/or sound item relating to the application. And the device presents, via the Man Machine Interface, the application through the at least one retrieved graphical and/or sound item relating to the application.

The invention also relates to corresponding device, server and system.

## Description

### Field of the invention:

The invention relates generally to a method for accessing a user interface relating to an application notably but not exclusively for an application relating to a banking field.

Furthermore, the invention pertains to a device for accessing a user interface relating to an application.

Moreover, the invention also relates to a server for accessing a user interface relating to an application.

Finally, the invention pertains to a system for accessing a user interface relating to an application as well.

### State of the art:

A known solution allows accessing an application from a mobile (tele)phone, as portable device, based upon a downloading of the concerned application from a remote server, as application repository.

The downloaded application includes, besides executable data relating to the application, a user interface relating to the concerned application.

One and the same application may be used by a plurality of service providers, like different banks, while each service provider has its own brand identity which has a specific look-and-feel.

However, the user interface relating to the application requires integrating it into a corresponding application program and therefore implies to have corresponding technical skills.

Such an additional integration task is time consuming and is therefore cost expensive for each service provider, so as to customize the user interface relating to the application.

Thus, there is a need to provide a solution that allows customizing the user interface relating to an application without needing that its service provider deals with an additional integration task.

### Summary of the invention:

The invention proposes a solution for satisfying the just herein above specified need by providing a method for accessing a user interface relating to an application.

According to the invention, a device comprises at least one memory. The memory stores at least one application. The device comprises or is connected to at least one Man Machine Interface. The method comprises the following steps. The device sends to a server a request for personalizing a presentation of an application accompanied with an identifier relating to a user interface relating to the application. The server retrieves at least one graphical and/or sound item relating to the application on a basis of the received identifier. The server sends to the device at least one message, as request response, including the at least one retrieved graphical and/or sound item relating to the application. And the device presents, via the Man Machine Interface, the application through the at least one retrieved graphical and/or sound item relating to the application.

The principle of the invention consists in using one application user interface identifier that is to be collected at a client side and to be transferred to a server and recognized at a server side, so as to provide a requesting device with one or several elements relating to the user interface.

It is noteworthy that the elements relating to the user interface allow generating a user interface that is specific to the considered application.

Thus, the elements relating to the user interface, as non-executable data, are loaded from the server to the device and then integrated into the device application.

Such a load and integration of the elements relating to the user interface do not involve a device user and is automatic due to a suitable device and server configuration.

Once integrated into the concerned application, the elements relating to the user interface configure an appearance of the concerned application.

The elements relating to the user interface may be visible and/or audible to a user of the device.

Contrary to the known solution, the invention allows customizing the user interface relating to an application without needing that its service provider deals with an additional integration task.

According to a further aspect, the invention is a device for accessing a user interface relating to an application.

According to the invention, the device comprises at least one memory. The memory stores at least one application. The device comprises or is connected to at least one Man Machine Interface. The device is adapted to send a request for personalizing a presentation of an application accompanied with an identifier relating to a user interface relating to the application. The device is adapted to receive at least one message, as request response, including the at least one retrieved graphical and/or sound item relating to the application. And the device is adapted to present, via the Man Machine Interface, the application through the at least one retrieved graphical and/or sound item relating to the application.

As device, it may be, among others, a (user) terminal, a Personal Computer (or PC), a mobile (tele)phone, a tablet, a handset, a desktop, a laptop, a camera, a game player or any other device that is able to access both a server and a Man Machine Interface(s) (or MMI).

As device, it may be a token that is coupled or connected to a (user) terminal, as hosting device, that is able to access both a server and a MMI(s).

Within the present description, a token is a smart object that is intended to communicate with the outside world.

As token, it may be a Universal Serial Bus (or USB) type dongle, a smart card, as removable token, to be coupled or connected to a terminal or a chip intended to be fixed, possibly in a removable manner, to a terminal, as hosting device.

According still to a further aspect, the invention is a server for accessing a user interface relating to an application.

According to the invention, the server is adapted to receive a request for personalizing a presentation of an application accompanied with an identifier relating to a user interface relating to the application. The server is adapted to retrieve at least one graphical and/or sound item relating to the application on a basis of the received identifier. And the server is adapted to send at least one message, as request response, including the at least one retrieved graphical and/or sound item relating to the application.

According still to a further aspect, the invention is a system for accessing a user interface relating to an application.

According to the invention, the system comprises at least one device and at least one server. The device comprises at least one memory. The memory stores at least one application. The device comprises or is connected to at least one Man Machine Interface. The device is adapted to send a request for personalizing a presentation of an application accompanied with an identifier relating to a user interface relating to the application. The device is adapted to receive at least one message, as request response, including the at least one retrieved graphical and/or sound item relating to the application. And the device is adapted to present, via the Man Machine Interface, the application through the at least one retrieved graphical and/or sound item relating to the application. And the server is adapted to receive a request for personalizing a presentation of an application accompanied with an identifier relating to a user interface relating to the application. The server is adapted to retrieve at least one graphical and/or sound item relating to the application on a basis of the received identifier. And the server is adapted to send at least one message, as request response, including the at least one retrieved graphical and/or sound item relating to the application.

### Brief description of the drawings:

Additional features and advantages of the invention will be more clearly understandable after reading a detailed description of one preferred embodiment of the invention, given as an indicative and non-limitative example, in conjunction with the following drawings:

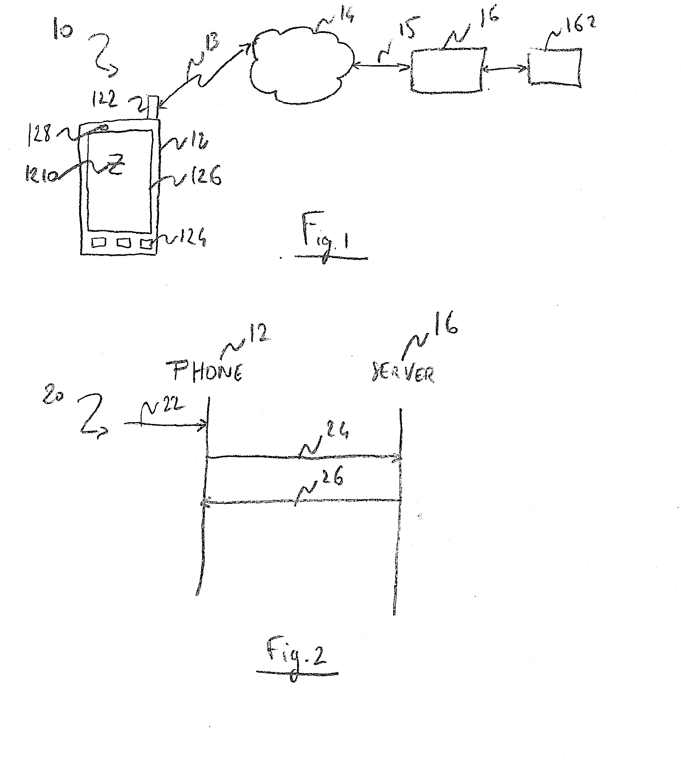

- Figure 1 illustrates a simplified diagram of one embodiment of a system for accessing a user interface relating to an application, the system including a mobile phone that supports the application and a remote web server, the system being configured to customize, via the phone MMI, the phone application user interface, according to the invention; and
- Figure 2 represents an example of one message flow between the phone and the remote web server of Figure 1, so as to download from the remote web server one or several user interface elements that relate to the phone application on a basis of an identifier uploaded from the phone application.

### Detailed description:

Herein under is considered a case in which the invention method for accessing a user interface relating to an application is implemented by a mobile phone, as stand-alone device at a requesting side.

Naturally, the herein below described embodiment is only for exemplifying purposes and is not considered to reduce the scope of the invention.

For example, instead of being a mobile phone, the device is a smart card or any other electronic medium that may have different form factors while including a chip, as token.

According to another embodiment, the token is a chip soldered, possibly in a removable manner, to a mobile phone, as hosting device.

**Figure 1** shows schematically a system 10 for accessing a User Interface (or UI) relating to an application.

Such a system 10 includes, at a client side, a mobile phone 12, as portable device and user terminal, and, at a server side, a remote web server 16.

As to the terminal, it may be any device including means for processing data, comprising or being connected to communication means for sending to and/or receiving data from outside, comprising or being connected to means for interfacing with a user, as Man Machine Interface (or MMI), and comprising or being connected to means (not represented) for storing data.

For sake of simplicity, the mobile phone 12 and the remote web server 16 are termed hereinafter the phone 12 and the server 16 respectively.

Such a ubiquitous terminal, like the phone 12, belongs preferably to the terminal user.

Only one phone 12 is represented for clarity and simplicity reasons.

However, the server 16 is connected to a plurality (or fleet) of such user terminals.

A service provider wishes to configure a UI relating to an application that the service provider manages. The service provider may desire that a phone 12 user recognizes data relating to a UI relating to an application that the service provider manages.

The phone 12 comprises preferably a wireless antenna 122, a keyboard 124 and a display screen 126. The display screen 126 allows displaying a graphical item(s). The graphical item(s) include(s) visible data.

Alternatively, instead of a separate keyboard, the display screen integrates a touch sensitive keyboard, when activated.

The phone 12 is preferably equipped with the wireless antenna 122 for exchanging data, through a long range RF link(s) 13, via a mobile radio-communication network 14, with the server 16.

Within the present description, the adjective "wireless" used within the expression "wireless antenna" signifies notably that the communication means communicates via one or several long range Radio-Frequency (or RF) links that may be more or less long.

The long range RF may be fixed at several hundreds of MHz, for instance, around 850, 900, 1800, 1900 MHz, 2 GHz or more.

The mobile radio-communication network 14 may be constituted by a Global Service for Mobiles (or GSM), a General Packet Radio Service (or GPRS), a Universal Mobile Telecommunications System (or UMTS), a Code Division Multiple Access (or CDMA) and/or a Long Term Evolution (or LTE) type network(s).

The mobile radio-communication network list is not exhaustive but only for exemplifying purposes.

Instead of a mobile radio-communication network(s), it may be constituted by an Internet network accessible, via a contact-less link, like a Wifi or Bluetooth one, through an intermediate entity, as Internet access point.

The phone 12 incorporates preferably a loudspeaker 128, so as to emit a sound item(s). The sound item(s) include audible sound data.

The phone MMI includes the display screen 126 and the loudspeaker 128.

Alternatively (not represented), the phone is connected to an external display screen and/or an external loudspeaker, as deported MMI.

The phone 12 includes preferably at least one microprocessor (not represented), at least one memory (not represented) and at least one Input/Output (or I/O) interface.

The phone memory stores (non-executable) data.

As data, it includes an identifier relating to a UI relating to the application.

As data, it may contain:
- an account number(s) relating to the phone user(s);
- a User IDentifier (or UID) and/or a user password that allow(s) identifying and authenticating a user of the phone 12 before the server 16;
- user data, like a banking account number, a first name, a last name, a birth date, and/or other appropriate data;
- an International Mobile Equipment Identity (or IMEI) or the like, as phone identifier,
- a Uniform Resource Identifier (or URI) or a Uniform Resource Locator (or URL) of the server 16 to be addressed; and/or
- an Internet Protocol (or IP) address of the server 16 to be addressed.

Instead of storing an identifier relating to the server 16 to be addressed, the phone user may be prompted to enter, through the phone 12 MMI, a server identifier.

The phone memory stores at least one application.

As application(s) supported by the phone 12, there is preferably an application that allows accessing a UI relating to the application.

The phone microprocessor processes data originating from the phone memory and/or an external entity(ies), like the server 16.

The phone microprocessor executes preferably the application, as user interface, so as to interact with a target application supported by the server 16 and offered to the phone user.

The phone 12, as mobile handset, plays, among others, a role of a portable device, so as to download from the server 16 data relating to a UI of the application, said application UI data.

The phone 12 is adapted to request to an identified server 16 one or several application UI elements while submitting it the identifier relating to a UI relating to the application.

Prior to receiving from the server 16 one or several messages that include one or several graphical and/or sound items relating to the application, as application UI element(s), the application may have either no associated UI or an associated default UI.

Once the phone 12 has received one or several graphical and/or sound items relating to the application, the phone 12 stores the graphical and/or sound items relating to the application and integrates them into the application.

Once the application UI element(s) is(are) integrated within the application, the phone 12 presents, via the phone MMI, the application through the downloaded graphical and/or sound item(s) relating to the application.

As graphical item(s) relating to the application, it includes:
- one or several colours;
- one or several fonts;
- one or several images;
- one or several logos;
- one or several icons;
- one or several wallpapers;
- one or several menu items;
- one or several windows;
- one or several object; and/or
- one or several positions of the object(s), be it either within the display screen 126 or relatively to another object(s).

As sound item(s) relating to the application, it includes:
- one or several melodies; and/or
- one or several songs.

The phone 12 may present, in a simultaneous or successive manner, via the phone MMI, the graphical and/or sound items relating to the application, according to a scenario or scenarios, as sequence(s) of the presented application UI elements, that are predefined by the application.

The UI relating to the application is, for instance, a web type user interface.

The phone 12 user may thus access the concerned application, through, for instance, a displayed "Z" 1210, while being able to identify its service provider, like a bank operator. The displayed "Z" 1210, as downloaded image relating to the application UI, allows customizing dynamically, easily and quickly, a UI relating to the application while replacing possibly a predefined default application UI. There is no need for the service provider to get involved in the integration of the application data into the application.

The phone user has preferably subscribed to a service(s) managed by the server 16.

The application, as service offered by the server 16, may further allow the phone 12 user to access information relating to her/his user account, like a Personal Identity Number (or PIN), a withdrawal time limit, a debit threshold and/or other data relating to a banking card.

The server 16, as addressee of a request for sending application UI data, may be identified by a URI or URL, as server identifier.

The server 16 is connected, through a bi-directional wire link(s) 15, to the mobile communication network(s) 14.

The server 16 is accessible through the mobile communication network(s) 14. The server 16 may be also accessed through an Internet type network.

The server 16 plays a role of a provider of data relating to a UI of one or several applications under the server 16 control.

The server 16 issues, upon a receipt of a request for sending an application UI element(s) along with an identifier relating to a UI relating to an application, data relating to the UI relating to the concerned application. This latter is previously retrieved based upon the received identifier relating to a UI relating to an application.

The server 16 is hosted by a computer including data processing means.

The server 16 is dedicated to running an application for managing a database relating to at least one service and communicating some information included within the database to outside.

The database includes data relating to a UI relating to one or several applications. Each set of data relating to a UI relating to one application is associated with one identifier relating to a UI relating to the application.

The server 16 accesses a memory, termed server memory 162.

The server memory 162 stores a database.

The database is also termed back-end database.

The server 16 may be operated by either a bank operator or on its behalf, a mobile communication network operator and/or a service provider.

The server 16 may be able to delegate to another server, as second server (not represented) connected to the server 16 one or several security functions, like user authentication, data decryption, data encryption, signature, verification of data integrity and/or application to data of an integrity algorithm.

The server 16 is accessible from at least the phone 12, as user terminal.

According to another embodiment (not represented), instead of a remote server, the server is a local server. The local server is embedded within an entity, like a token, and is locally accessible, i.e. up to 10 m via a short range RF link, from the phone 12, as user terminal.

**Figure 2** depicts an exemplary embodiment of the invention method 20 for accessing a UI relating to an application.

It is assumed that the phone 12 receives an identifier 22 relating to a UI relating to an application.

It is further assumed that the phone 12 supports the application that is able to capture, after a possible decoding, the identifier relating to a UI relating to an application.

According to a first embodiment, the phone 12 receives an email that includes a two-dimensional code that comprises the identifier relating to a UI relating to an application. The two-dimensional code includes a Quick Response (or QR) code.

According to a second embodiment, the phone 12 receives a Short Message Service (or SMS) type message that includes an URI relating to the server 16 to be addressed. The server URI comprises the identifier relating to a UI relating to an application.

According to a third embodiment, the phone 12 receives a card carrier, as mail, that comprises a banking card and a printed two-dimensional code including the identifier relating to a UI relating to an application. The two-dimensional code includes a QR code.

The phone 12 and the server 16 exchange data by using an HyperText Transfer Protocol (or HTTP) or HTTPSecure (or HTTPS) type channel.

Alternately, the phone 12 and the server 16 may use any other data exchange protocol, like a SMS type channel, allowing to transfer data between them.

Firstly, the phone 12 sends to the server 16 a request 24, like an HTTP command "get data", for personalizing a presentation of an application along with the identifier relating to a UI relating to an application.

The server 16 retrieves, as application UI elements, one or several graphical and/or sound items relating to the concerned application on a basis of the received identifier.

The server 16 sends to the phone 12 one or several messages 26, as request response, that includes the retrieved graphical and/or sound items relating to the concerned application.

The phone 12 presents, via the phone MMI, the application through the retrieved graphical and/or sound items relating to the concerned application.

The phone 12 user benefits thus from an application UI that is personalized by the service provider. Such a personalization may be compliant with the service provider brand identity.

The embodiment that has just been described is not intended to limit the scope of the concerned invention. Other embodiments may be given. As another embodiment example, instead of a terminal, like the phone 12, a token (not represented), as portable device that is coupled or connected to the user terminal, supports an application the user interface of which is generated upon elements received from the server and carries out the functions that are carried out by the phone 12 as described supra.

## Claims

1. A method (20) for accessing a user interface relating to an application,
**characterized in that**, a device (12) comprising at least one memory, the memory storing at least one application, the device comprising or being connected to at least one Man Machine Interface (126, 128), the method comprises the following steps:
- the device sends to a server (16) a request (24) for personalizing a presentation of an application accompanied with an identifier relating to a user interface relating to the application;
- the server retrieves at least one graphical and/or sound item relating to the application on a basis of the received identifier;
- the server sends to the device at least one message (26), as request response, including the at least one retrieved graphical and/or sound item relating to the application; and
- the device presents, via the Man Machine Interface, the application through the at least one retrieved graphical and/or sound item (1210) relating to the application.

2. Method according to claim 1, wherein, prior to sending the identifier, the device receives an email, the email including a two-dimensional code, the two-dimensional code including the identifier (22).

3. Method according to claim 1, wherein, prior to sending the identifier, the device receives a Short Message Service type message, the Short Message Service message including a Uniform Resource Identifier relating to the server, the Uniform Resource Identifier including the identifier.

4. Method according to any of claims 1 to 3, wherein the device sends to the server the request for personalizing a presentation of an application, by using either an HyperText Transfer Protocol type channel or a Short Message Service type channel.

5. Method according to any of claims 1 to 4, wherein the at least one retrieved graphical item relating to the application is included within a group that comprises:
- at least one colour;
- at least one font;
- at least one image (1210);
- at least one logo;
- at least one icon;
- at least one wallpaper;
- at least one menu item;
- at least one window;
- at least one object;
- at least one position of the at least one object.

6. Method according to any of claims 2 to 5 depending on claim 2, wherein the two-dimensional code includes a Quick Response code.

7. A device (12) for accessing a user interface relating to an application, **characterized in that**, the device comprising at least one memory, the memory storing at least one application, the device comprising or being connected to at least one Man Machine Interface, the device is adapted to:
- send a request (24) for personalizing a presentation of an application accompanied with an identifier relating to a user interface relating to the application;
- receive at least one message (26), as request response, including the at least one retrieved graphical and/or sound item relating to the application; and
- present, via the Man Machine Interface, the application through the at least one retrieved graphical and/or sound item (1210) relating to the application.

8. Device according to claim 7, wherein the Man Machine Interface includes at least one display screen (126) and/or at least one loudspeaker (128).

9. A server (16) for accessing a user interface relating to an application, **characterized in that** the server is adapted to:
- receive a request (24) for personalizing a presentation of an application accompanied with an identifier relating to a user interface relating to the application;
- retrieve at least one graphical and/or sound item relating to the application on a basis of the received identifier; and
- send at least one message (26), as request response, including the at least one retrieved graphical and/or sound item (1210) relating to the application.

10. A system (10) for accessing a user interface relating to an application, **characterized in that**, the system comprising at least one device (12) and at least one server (16),
**in that**, the device comprising at least one memory, the memory storing at least one application, the device comprising or being connected to at least one Man Machine Interface (126, 128), the device is adapted to:
- send a request (24) for personalizing a presentation of an application accompanied with an identifier relating to a user interface relating to the application;
- receive at least one message (26), as request response, including the at least one retrieved graphical and/or sound item relating to the application; and
- present, via the Man Machine Interface, the application through the at least one retrieved graphical and/or sound item (1210) relating to the application; and
**in that** the server is adapted to:
- receive a request for personalizing a presentation of an application accompanied with an identifier relating to a user interface relating to the application;
- retrieve at least one graphical and/or sound item relating to the application on a basis of the received identifier; and
- send at least one message, as request response, including the at least one retrieved graphical and/or sound item relating to the application.
